# EUROPÄISCHE PATENTSCHRIFT

(11) **EP 2 802 752 B1**
(45) Veröffentlichungstag und Bekanntmachung des Hinweises auf die Patenterteilung: **04.05.2016**
(21) Anmeldenummer: 13700293.7
(22) Anmeldetag: 11.01.2013
(51) Int. Cl.: F01N 3/20, F01N 3/28, B01D 53/88

(54) **ELEKTRISCH BEHEIZBARER WABENKÖRPER MIT MEHREREN MIT EINEM ANSCHLUSSSTIFT ELEKTRISCH VERBUNDENEN BLECHLAGEN**
ELECTRICALLY HEATABLE HONEYCOMB STRUCTURE WITH SEVERAL SHEET METAL LAYERS WHICH ARE ELECTRICALLY CONNECTED TO A CONNECTOR PIN
CORPS EN NID D'ABEILLES RÉCHAUFFABLE ÉLECTRIQUEMENT AVEC PLUSIEURS COUCHES EN TÔLE ÉLECTRIQUEMENT CONNECTÉES À UNE BROCHE DE CONNECTION

(30) Priorität: 13.01.2012 DE 102012000496; 05.04.2012 DE 102012007020
(43) Veröffentlichungstag der Anmeldung: 19.11.2014
(73) Patentinhaber: Continental Automotive GmbH, 30165 Hannover (DE)
(72) Erfinder: BRÜCK, Rolf, 51429 Bergisch Gladbach (DE); KURTH, Ferdi, 53894 Mechernich (DE); HIRTH, Peter, 51503 Rösrath (DE); HÄRIG, Thomas, 53819 Neunkirchen-Seelscheid (DE)
(86) Internationale Anmeldenummer: PCT/EP2013/050485
(87) Internationale Veröffentlichungsnummer: WO 2013/104754

(56) Entgegenhaltungen:
- EP-B1- 1 967 712
- WO-A1-92/02714
- GB-A- 2 313 559

## Beschreibung

Die vorliegende Erfindung liegt auf dem Gebiet der elektrisch beheizbaren Wabenkörper, insbesondere für Abgasbehandlungssysteme von Verbrennungsmotoren, vorzugsweise in Kraftfahrzeugen. Elektrisch beheizbare Wabenkörper werden beispielsweise benötigt, um Komponenten in einem Abgasreinigungssystem zu heizen, um dadurch eine bestimmte Mindesttemperatur für bestimmte chemische Reaktionen, insbesondere auch für katalytisch aktivierte Reaktionen, zu erreichen. Dies findet bei Abgaskatalysatoren, Partikelfiltern oder Anlagen zu Reduzierung von Stickoxiden Anwendung.

Eine typische Bauform eines solchen elektrisch beheizbaren Wabenkörpers ist z. B. in der WO 96/10127 beschrieben. Auch die EP 1 967 712 B1 zeigt den Aufbau eines elektrisch beheizbaren Wabenkörpers. In beiden Schriften ist die Möglichkeit dargestellt, einen solchen elektrisch beheizbaren Wabenkörper an einem benachbart angeordneten Wabenkörper abzustützen.

Um einen für eine elektrische Beheizung genügend hohen Ohm'schen Widerstand bereitstellen zu können, bestehen typische elektrisch beheizbare Wabenkörper aus einem Stapel von mehreren Blechlagen, die gemeinsam mindestens einen mittleren elektrisch leitfähigen Strompfad bilden und die so strukturiert sind, dass sie für ein Gas in einer axialen Richtung durchströmbare Kanäle bilden. Typischerweise werden dafür grob strukturierte und fein strukturierte oder glatte Bleche abwechselnd aufeinander geschichtet, beispielsweise insgesamt fünf bis fünfzehn Bleche. Durch gegensinniges Verschlingen des Stapels nach Art einer S-Form wird dieser Stapel so geformt, dass er einen runden oder ovalen Querschnitt ausfüllt, wobei benachbarte Windungen des Stapels elektrisch voneinander isoliert sein müssen. Dies kann durch Isolierschichten oder durch elektrisch isolierende Luftspalte erreicht werden, wobei Luftspalte bei starken thermischen Dehnungen im Betrieb dadurch stabilisiert werden können, dass die Windungen des Stapels mittels Stützstiften an einem benachbarten Wabenkörper befestigt und dadurch in ihrer Position gesichert werden. Auf diese Weise können auch in axialer Richtung relativ kurze elektrisch beheizbare Wabenkörper stabilisiert werden, beispielsweise scheibenförmige Wabenkörper mit einer axialen Ausdehnung von nur 1 bis 5 cm.

Es hat sich gezeigt, dass es für die Stabilität und die elektrischen Eigenschaften eines elektrisch beheizbaren Wabenkörpers vorteilhaft ist, diesen aus abwechselnden grob strukturierten und fein strukturierten Blechlagen aufzubauen, insbesondere aus Blechlagen mit einer feinen ersten Wellung, mit einer kleinen ersten Wellhöhe und einer kleinen ersten Wellenlänge und aus Blechlagen mit einer zweiten groben Struktur, insbesondere mit einer zweiten Wellung mit großer zweiter Wellhöhe und großer zweiter Wellenlänge. Bevorzugt werden die Welllagen innerhalb eines Stapels an ihren Berührungspunkten miteinander verlötet.

Ein Problem stellt allerdings die elektrische Verbindung des Stapels mit einer externen Stromquelle dar. Da der verschlungene elektrisch leitfähige Stapel im Inneren eines metallischen Mantelrohrs angeordnet werden muss, ist zumindest eine elektrisch vom Mantelrohr isolierte Zuführung zu dem Stapel erforderlich, wobei typischerweise so hohe Stromstärken durch den Stapel geleitet werden sollen, dass eine möglichst gleichmäßige Verteilung des Stroms auf die einzelnen Blechlagen des Stapels auch im Bereich der Kontaktierung wünschenswert oder zur Vermeidung von Schäden sogar erforderlich ist.

Auch darf der elektrische Widerstand pro Längeneinheit in einem Anschlussbereich nicht zu hoch sein gegenüber dem elektrischen Widerstand pro Längeneinheit im weiteren Verlauf des Stapels, damit der Anschlussbereich sich nicht durch Ohm'sche Wärme zu stark aufheizt. Das ist wichtig, weil einerseits ein elektrischer Anschluss außen nicht zu heiß werden darf und andererseits gerade in einem Anschlussbereich eine Kühlung durch hindurchströmendes Abgas nicht in dem Maße gewährleistet werden kann wie im übrigen Verlauf des Stapels.

Bei den im Stand der Technik bekannten Ausführungsformen sind daher typischerweise Stromverteilungsstrukturen vorhanden, an denen die einzelnen Blechlagen des Stapels enden, wobei die Stromverteilungsstruktur wiederum über einen isolierend durch den Metallmantel des Wabenkörpers geführten Anschlussstift kontaktiert wird. Die bei der beschriebenen Bauform typische Stromverteilungsstruktur ist eine Art Halbschale, die parallel zu dem Metallmantel verläuft und an der einzelne Blechlagen enden und metallisch verbunden, insbesondere angelötet, sind. Diese Halbschale muss wiederum durch eine Isolierschicht von dem Metallmantel des Wabenkörpers elektrisch isoliert sein. Dies kann durch einen Luftspalt erreicht werden, jedoch ist es dazu erforderlich, dass die Halbschale ebenfalls in ihrer Lage stabilisiert wird, was vorzugsweise durch zusätzliche Stützstifte erfolgt, wobei auch hier immer auf die elektrische Isolierung von den Strukturen, an denen die Abstützung erfolgt, geachtet werden muss.

Das Problem der Kontaktierung stellt sich bei einem elektrisch beheizbaren Wabenkörper mindestens an einem Ende des Stapels, nämlich dann, wenn das andere Ende des Stapels direkt an dem Metallmantel angebunden werden kann. Falls beide Enden des Stapels nicht mit Masse verbunden werden sollen, müssen beide Enden des Stapels entsprechend kontaktiert werden.

Aufgabe der vorliegenden Erfindung ist es, die mit Bezug auf den Stand der Technik geschilderten Probleme zumindest teilweise zu lösen und insbesondere einen Wabenkörper mit einem elektrischen Anschluss von mehreren Blechlagen an einen Anschlussstift zu schaffen, der einfach und preisgünstig herzustellen ist, eine Stromverteilungsstruktur weitgehend vermeidet und insbesondere einen stabilen Aufbau eines elektrisch beheizbaren Wabenkörpers ohne Halbschalen zwischen dem Metallmantel und dem Stapel aus Blechen ermöglicht.

Zur Lösung dieser Aufgaben dient ein Wabenkörper gemäß dem Anspruch 1. Vorteilhafte Ausgestaltungen sind in den abhängigen Ansprüchen beschrieben, wobei diese in technisch sinnvoller Weise untereinander kombiniert werden können.

Der erfindungsgemäße Wabenkörper mit mehreren elektrisch mit einem Anschlussstift verbundenen gemeinsam mindestens einen elektrisch leitfähigen mittleren Strompfad bildenden Blechlagen weist einen Metallmantel mit einem Innenumfang auf, durch den der Anschlussstift in einer Durchführung elektrisch isolierend hindurchgeführt ist. Dabei sind die Blechlagen abwechselnd angeordnete grob strukturierte und fein strukturierte oder glatte Bleche, die gemeinsam einen Stapel mit einer obersten und einer untersten Blechlage bilden, der für ein Gas in einer axialen Richtung durchströmbare Kanäle zwischen den Blechlagen aufweist. Der Anschlussstift verläuft in einer radialen Richtung durch den Metallmantel und ist durch eine elektrisch leitende Verbindung, insbesondere durch Widerstandsschweißen hergestellt, mit mindestens zwei der Blechlagen, vorzugsweise mindestens der Hälfte der Blechlagen, insbesondere allen Blechlagen, direkt oder über mindestens ein Zwischenstück metallisch verbunden, wobei der elektrische Widerstand pro Längeneinheit des mittleren Strompfades in dem Anschlussbereich höchstens 10 % größer ist als ein mittlerer elektrischer Widerstand pro Längeneinheit des mittleren Strompfades in dem Stapel.
Obwohl es schwierig erscheint, einen relativ dicken Anschlussstift mit mehreren (im Vergleich dazu) relativ dünnen Blechlagen, die zudem auch noch strukturiert sein können, zu verbinden, hat sich herausgestellt, dass eine direkte Verbindung mit zwei oder mehr aufeinander liegenden oder zusammengequetschten Blechlagen nicht nur möglich ist, sondern sogar zu einer sehr stabilen Halterung des Stapels führt. Dies wiederum erlaubt eine stabile Bildung eines Luftspalts zwischen dem Stapel und dem Metallmantel, ohne dass stabilisierende Strukturen wie Halbschalen oder Stromverteilungsstrukturen erforderlich sind. Die zwei oder mehr mit dem Anschlussstift verbundenen Blechlagen enden praktisch an der gleichen Stelle, sind also nicht mit Abstand zueinander an einer Stromverteilungsstruktur angeschlossen. Im Anschlussbereich ist der mittlere Strompfad vom Anschlussstift ausgehend eventuell gekrümmt oder unregelmäßig geformt, bevor er in etwa parallel zum Stapel verläuft. Dies kann auch als Definition des Anschlussbereiches betrachtet werden, so dass der Anschlussbereich gerade der Bereich in der Nähe des Anschlussstiftes ist, in dem der mittlere Strompfad noch nicht im Wesentlichen parallel zum Stapel verläuft und/oder einen anderen elektrischen Widerstand pro Längeneinheit aufweist als im weiteren Verlauf des Stapels. Es sei darauf hingewiesen, dass der Strompfad überall so gestaltet sein muss, dass er keine Teilbereiche aufweist, in denen der Widerstand zum Verhältnis des dort im Betrieb fließenden Stromes so hoch ist, dass eine Überhitzung oder sogar ein Schmelzen der Struktur droht. Dies ist ein wesentlicher Aspekt bei der Gestaltung des Anschlussbereiches. Zwar kann lokal entstehende Ohm'sche Wärme in gewissen Grenzen an Nachbarbereiche oder das umgebende Gas abgeleitet werden, insbesondere wenn der Wabenkörper von Gas durchströmt wird, jedoch ist die Vermeidung von besonders heißen Bereichen unter allen Betriebsbedingungen gerade in der Nähe des Anschlussstiftes wünschenswert.

Der Anschlussstift ist bevorzugt eine Art (starrer) Bolzen, der zur Stromleitung von z.B. einem Anschlusskabel hin zu den Blechlagen dient. Auch wenn grundsätzlich bei dem Wabenkörper mehrere Anschlussstifte vorgesehen sein können, so ist doch die Ausgestaltung mit einem einzelnen Anschlussstift (pro elektrischer Kontaktierung eines Stapels) bevorzugt. Dabei erstreckt sich dieser Anschlussstift bevorzugt beidseits des Metallmantels und durch eine darin ausgebildete Durchführung hindurch. Die Durchführung kann einen an den Querschnitt bzw. die Form des Anschlussstiftes angepasste Öffnung in dem Metallmantel sein. Die Durchführung ist insbesondere so ausgeführt, dass kein Gas zwischen dem Anschlussstift und dem Metallmantel entweichen kann, ggf. unter Einsatz eines Dichtungsmaterials. Außerdem kann vorgesehen werden, dass in/an der Durchführung zumindest ein Halteelement oder ein Bewegungskompensationselement vorgesehen ist, so dass der Anschlussstift auch bei hoher thermischer und/oder dynamischer Belastung mit diesen Hilfsmitteln sicher fixiert ist.

Bei der Gestaltung der Blechlage können verschiedene Grundformen eingesetzt werden. Wenn keine Strukturen in die Blechlage eingeprägt sind, wird regelmäßig von glatten Blechlagen gesprochen, auch wenn diese im Metallmantel insgesamt z. B. S-förmig, Spiralförmig, U-förmig, etc. gebogen/gewunden angeordnet sind. Falls die Blechlagen eingeprägte Strukturen (Wellen, Stufen, Noppen, etc.) aufweisen, sind diese als strukturierte Blechlagen bezeichnet. Sollten Blechlagen mit unterschiedlichen Strukturen vorgesehen sein, werden die Blechlagen, die Blechlagen mit einer größeren Strukturierung (bezüglich Strukturhöhe/Wellhöhe quer zur Blechlage und/oder bezüglich Strukturweite/Welllänge) als "grob strukturiert" und die mit einer (im Vergleich dazu) kleineren Strukturierung als "fein strukturiert" bezeichnet. Es ist möglich, dass alle Blechlagen des Wabenkörpers einen (einzelnen) oder mehrere Stapel bilden, die dann elektrisch voneinander isoliert angeordnet sind.

Mittels der (strukturierten) Blechlagen können Kanäle gebildet werden, so dass der Gasstrom den Wabenkörper durchdringen kann. Da dieser Gasstrom an einer ersten Stirnseite eintritt und an einer zweiten Stirnseite austritt, kann das Gas also in "axialer" Richtung durch den Wabenköper hindurch geführt werden. Auch wenn es ggf. aus Gründen der einfachen Fertigung und eines geringen Strömungswiderstandes bevorzugt ist, dass die Kanäle selbst im Wesentlichen parallel zur axialen Richtung verlaufen, so ist dies jedoch nicht zwingend. Es ist auch möglich, dass zumindest ein Teil (ggf. auch alle) Kanäle zur axialen Richtung geneigt, wellenförmig, helixförmig, etc. verlaufen (aber zumindest eine Verbindung hin zu den beiden Stirnseiten aufweisen).

Die elektrische leitende Verbindung kann durch unmittelbaren Kontakt zwischen Anschlussstift und Blechlage ("direkt") und/oder durch (mindestens) ein Zwischenstück realisiert sein, wobei das Zwischenstück (elektrisch leitend) zwischen dem Anschlussstift und der Blechlage positioniert und insbesondere an beiden Bauteilen (stoffschlüssig) befestigt ist. Das Zwischenstück kann z.B. (form-)stabiler als die Blechlagen ausgeführt sein, eine passende Aufnahme für ein Ende des Anschlussstifts aufweisen und/oder eine Stromverteilungsfunktion von einem kleinen Querschnitt des Anschlussstifts hin zu einem (z.B. bis maximal 300%) größeren Bereich der mindestens einen Blechlage realisieren. Insbesondere bei Ausführungsformen, bei denen der Anschlussstift einen erheblich kleineren Durchmesser hat als die axiale Ausdehnung des Stapels (also die Breite der Blechlagen), ist ein Zwischenstück nützlich, um einen Strom im Anschlussbereich gleichmäßig über die axiale Ausdehnung des Stapels zu verteilen. Das Zwischenstück hat in Umfangsrichtung des Metallmantels nur eine sehr geringe Ausdehnung, z. B. 2 bis 10 mm. Es kann auch im Inneren des Stapels angeordnet sein, so dass zumindest ein Teil der Blechlagen außen an dem Zwischenstück befestigt ist.

Die Blechlage stellt insbesondere keinen Innenmantel und/oder kein Innenrohr dar, das (konzentrisch zum bzw.) im Metallmantel positioniert ist. Die Blechlage erstreckt sich ausgehend von einem Rand des Wabenkörpers (nahe des Metallmantels) hin zu einem Zentrumsbereich bzw. der Mitte des Wabenkörpers (und ggf. auch wieder mindestens einmal wieder hin zum Rand).

Weiter verläuft die oberste Blechlage in dem Stapel über mindestens 35 % des Innenumfangs etwa parallel zu dem Metallmantel und ist dort durch einen Luftspalt von diesem getrennt. Im Hinblick auf den Luftspalt sei angemerkt, dass hierunter insbesondere ein Raum im Wesentlichen frei von Einbauten oder Bauteilen verstanden wird, was aber nicht ausschließt, dass elektrisch isolierende Einbauten zur Stabilisierung des Luftspaltes oder elektrisch isolierende Beschichtungen auf den angrenzenden Oberflächen vorhanden sind. Folglich erstreckt sich der Luftspalt insbesondere von der Inneren Oberfläche des Metallmantels bis hin zur Oberfläche der gegenüberliegenden Blechlage. Der Luftspalt erstreckt sich hierbei (zusammenhängend) in Umfangrichtung über mindestens 35 % des Innenumfangs des Metallmantels. Damit, dass der Stapel (etwa) parallel zum Metallmantel verläuft, soll mit anderen Worten ausgedrückt werden, dass der Luftspalt (zumindest in weiten Bereichen) eine (etwa) gleichbleibende Spaltbreite aufweist (wenn man die ggf. vorgesehene Struktur der obersten/äußersten Blechlage und/oder die Umfangsrandbereiche des Luftspaltes vernachlässigt). Ein solcher Luftspalt ist bevorzugt zumindest zwischen dem Anschlussstift und einer in Umfangsrichtung benachbarten Lagerstelle (Stützstift) der Blechlage hin zum Metallmantel vorgesehen. Der Luftspalt ist gerade auch in dem (axialen) Bereich / Querschnitt des Wabenkörpers ausgebildet, in dem der Anschlussstift vorgesehen ist.

In einer bevorzugten Ausführungsform verläuft die oberste Blechlage in dem Stapel sogar über mindestens 40 % der Länge des Innenumfangs (etwa) parallel zu dem Metallmantel und ist von diesem durch einen Luftspalt getrennt. Betrachtet man den Wabenkörper von seiner Stirnseite in axialer Richtung und teilt ihn in 360° Winkelbereich ein, so verläuft die oberste Blechlage also bevorzugt über einen Winkelbereich von etwas weniger als 180° parallel zum Metallmantel, mindestens jedoch etwa 144°, je nach der genauen Formgebung des Anschlussbereiches und dem Verlauf des Stapels in das Innere des Wabenkörpers.

In einer weiteren bevorzugten Ausführungsform ist die oberste Blechlage, vorzugsweise auch die unterste Blechlage des Stapels eine fein strukturierte oder glatte Blechlage. Dies ist besonders vorteilhaft, weil bevorzugt die oberste und/oder die unterste Blechlage des Stapels mit dem Anschlussstift metallisch verbunden werden können, wodurch die übrigen Blechlagen quasi eingeschlossen werden und ihre Enden, selbst wenn diese nicht mit dem Anschlussstift verbunden werden können, keine Bewegungsfreiheit haben und daher keine elektrischen Kurzschlüsse verursachen können.

Unterstützt werden kann die Funktion der obersten und/oder der untersten Blechlage dadurch, dass eine oder beide zumindest in Teilbereichen eine Dickenverstärkung aufweisen und/oder dicker sind als die übrigen Blechlagen. Insbesondere können die dickeren Teilbereiche eine Blechdicke von 80 bis 200 µm [Mikrometer] aufweisen, besonders bevorzugt 110 bis 170 µm, während die übrigen Blechlagen typischerweise eine Dicke von 20 bis 60 µm aufweisen. Eine größere Dicke kann entweder dadurch erreicht werden, dass in dem gewünschten Bereich dickere Bleche eingesetzt werden und/oder dadurch, dass die oberste bzw. die unterste Blechlage in dem betreffenden Bereich aus zwei oder drei aneinander liegenden und ggf. gemeinsam strukturierten Blechschichten bestehen. Jedenfalls ist bevorzugt, dass auch diese dickere Blechlage noch deutlich dünner ist als der Metallmantel, der z. B. eine Dicke von mehr als 1 mm [Millimeter] hat.

In einer weiteren bevorzugten Ausführungsform weist die unterste Blechlage zumindest in einem Anschlussbereich und entlang eines Teils des Stapels eine Dickenverstärkung auf und/oder ist dicker als die übrigen Blechlagen. Beide äußeren Blechlagen dicker zu machen, erleichtert die metallische Verbindung mit dem Anschlussstift, insbesondere wenn die Methode des Widerstandsschweißens angewendet wird.

In einer besonderen Ausführungsform der Erfindung besteht zumindest die oberste Blechlage aus einem Nickel, Chrom und Eisen enthaltenden Stahl, auch unter der Bezeichnung NiCroFer bekannt. Die mechanischen und elektrischen Eigenschaften, insbesondere die gute elektrische Leitfähigkeit und Hochtemperaturkorrosionsbeständigkeit dieses Werkstoffes bewirken eine besondere Eignung für die Anforderungen an die oberste Blechlage.

Für eine gleichmäßige Stromverteilung in dem Stapel ist es natürlich besonders bevorzugt, alle Blechlagen mit dem Anschlussstift zu verbinden, wobei die Blechlagen dazu entweder zusammengepresst werden, um eine vorhandene Struktur zu glätten, und/oder indem die Blechlagen an den Enden nicht strukturiert sind.

In einer anderen Ausführungsform mit einer gleichmäßigen Verjüngung eines Stapels aus grob strukturierten und fein strukturierten Blechen vor dem Verbinden mit einem Anschlussstift, ist es vorteilhaft, die grob strukturierten Bleche kürzer als die glatten oder fein strukturierten Blechlagen zu gestalten, so dass die grob strukturierten Blechlagen vor Erreichen des Anschlussstifts enden und nur die glatten oder fein strukturierten Blechlagen in einem Anschlussbereich bis zum Anschlussstift verlaufen. Grundsätzlich gibt es zwar verschiedene Möglichkeiten, mehrere strukturierte Blechlagen in einem Anschlussbereich zusammen zu quetschen, oder die Strukturierung auslaufen zu lassen, jedoch ist fertigungstechnisch die Verwendung von unterschiedlich langen Blechlagen in einem Stapel einfacher als eine besondere Formgebung im Anschlussbereich. Selbst wenn die grob strukturierten Blechlagen jede an einer anderen Stelle enden, ist dies fertigungstechnisch nicht besonders schwierig, insbesondere wenn bei einer symmetrischen Verschlingung eines Wabenkörpers mit entsprechenden Anschlüssen an beiden Enden die Längenänderungen sich gegenseitig kompensieren, so dass die gewellten Blechlagen trotz unterschiedlicher Endpunkte gleich lang sein können.

Tatsächlich haben Versuche ergeben, dass besonders stabile Bauformen dann entstehen, wenn die grob strukturierten und fein strukturierten Bleche jeweils gewellt sind, wobei eine zweite Wellhöhe der grob strukturierten Bleche größer ist als eine erste Wellhöhe der fein strukturierten Bleche, und zwar um einen Faktor 3 bis 10, vorzugsweise 4 bis 6. Es hat sich gezeigt, dass unter verschiedenen Gesichtspunkten diese Art der Strukturierung vorteilhaft ist. Die Einbindung von Stützstiften wird durch eine gewisse Elastizität aller Blechlagen erleichtert, die elektrisch leitende Verbindung mit einem Anschlussstift wider Erwarten kaum erschwert.

Bei Verwendung von gewellten Blechen für alle Blechlagen des Stapels ist es auch vorteilhaft, wenn die grob strukturierten Blechlagen eine zweite Wellenlänge aufweisen, die größer ist als eine erste Wellenlänge der fein strukturierten Blechlagen, und zwar mindestens um einen Faktor 1,5. Bevorzugt ist auch, dass dieser Faktor einen Wert von 5 nicht überschreitet, insbesondere nicht einen Wert von 3. Bei der Auswahl von Wellhöhen und Wellenlängen der grob und fein strukturierten Blechlagen sind technisch vernünftige Grenzen einzuhalten. Insbesondere sollen die Verhältnisse und Wellformen so gewählt werden, dass möglichst keine Kanäle mit sehr kleinem Querschnitt entstehen, die sich bei einer Beschichtung möglicherweise zusetzen können.

Bei der Verbindung des Anschlussstifts mit zwei oder mehr Blechlagen des Stapels erfolgt diese Verbindung bevorzugt nur mit glatten oder fein strukturierten Blechlagen und zwar insbesondere durch Widerstandsschweißen.

Je nach den räumlichen und technischen Gegebenheiten kann in einer anderen Ausführungsform der Anschlussstift auch unter Zwischenschaltung eines Zwischenstücks mit Blechlagen des Stapels metallisch verbunden sein, wobei das Zwischenstück mehrere Blechlagen des Stapels in einem Anschlussbereich umfasst. Die Verwendung eines Zwischenstücks kann von Vorteil sein, wenn die Dicke der Blechlagen im Vergleich zu dem Querschnitt des Anschlussstifts zu gering für eine direkte Schweißverbindung ist oder genügende Anpresskräfte beim Schweißvorgang nicht erreicht werden können. Trotzdem ist eine Verbindung von Anschlussstift, Zwischenstück und Blechlagen bei manchen Ausgestaltungen in einem Schweißvorgang möglich.

Durch die verschiedenen beschriebenen Maßnahmen kann sichergestellt werden, dass der Anschlussbereich einen etwa gleichbleibenden (maximal 10 % größeren) oder bevorzugt sogar einen geringeren elektrischen Widerstand pro Längeneinheit hat als der Stapel im weiteren Verlauf, insbesondere einen mindestens 10 % und besonders bevorzugt maximal 20 % niedrigeren elektrischen Widerstand pro Längeneinheit, so dass sich der Anschlussbereich nicht zu stark aufheizen kann, weil die dort entstehende geringe Ohmsche Wärme genügend in den Stapel oder den Anschlussstift abgeleitet wird. Grundsätzlich erstrebenswert ist es, den Widerstand im Anschlussbereich niedrig zu halten, da dieser Bereich weniger gekühlt wird und der Anschlussstift im Betrieb nicht zu heiß werden soll. Dies ist jedoch nicht immer erreichbar, wenn man auf Stromverteilungsstrukturen, insbesondere halbschalenförmige Stromverteilungsstrukturen verzichtet. Erfindungsgemäß soll aber eine so gestaltete Verbindung der Blechlagen mit dem Anschlussstift oder einem Zwischenstück hergestellt werden, dass der Widerstand pro Längeneinheit im Anschlussbereich nicht mehr als 10 % oberhalb des durchschnittlichen Widerstandes pro Längeneinheit des Stapels liegt. Bevorzugt soll der Widerstand pro Längeneinheit im Anschlussbereich noch weniger von dem des Stapels abweichen oder diesen sogar unterschreiten.

In einer bevorzugten Ausführungsform der Erfindung ist der Anschlussstift auf einer Fläche von mindestens 10 mm² [Quadratmillimeter] mit zwei (2) bis fünf (5) Blechlagen des Stapels metallisch verbunden, wobei das Verbindungsende des Anschlussstifts 3 bis 8 mm [Millimeter], vorzugsweise 4 bis 6 mm, vom Innenumfang des Metallmantels beabstandet ist. Auf diese Weise kann der elektrische Anschluss die erforderlichen elektrischen Ströme in den Stapel einleiten und diesen gleichzeitig mit einem genügenden Abstand vom Metallmantel stabilisieren, so dass eine elektrische Isolierung zwischen Stapel und Metallmantel durch einen Luftspalt sichergestellt ist.

Die bevorzugte Ausführungsform der Erfindung ist eine gegensinnige Verschlingung des Stapels nach Art einer S-Form, wobei die Windungen des Stapels untereinander durch Luftspalte elektrisch isoliert sind. Diese Ausführungsform ist an sich bekannt, konnte jedoch wegen der bei starken Temperaturänderungen auftretenden mechanischen Bewegungen der Blechlagen nicht ohne Stromverteilungsstrukturen oder Halbschalen gebaut werden, was durch die vorliegende Erfindung jetzt aber ermöglicht wird, so dass auch eine elektrische Isolierung des Stapels mittels Luftspalt gegenüber dem Metallmantel realisiert werden kann.

Weiter ist vorgesehen, dass zumindest die dickere oberste Blechlage des Stapels oder ihre Dickenverstärkung sich nur über einen Teil der Länge des Stapels erstreckt, vorzugsweise bis zu einem inneren Ende etwa in der Mitte des Wabenkörpers.

Erfindungsgemäß hat gerade die oberste Blechlage des Stapels besondere Funktionen. Bei einer S-förmigen Bauform bildet diese oberste Blechlage über fast die Hälfte des Innenumfangs die Begrenzung zu dem isolierenden Luftspalt gegenüber dem Metallmantel, sie dient der elektrischen Verbindung mit dem Anschlussstift und begrenzt die nicht mit dem Anschlussstift verbundenen inneren Blechlagen. Wenn die oberste Blechlage eine Dickenverstärkung aufweist bzw. dicker ist als die anderen Blechlagen, so hat es sich als vorteilhaft gezeigt, wenn dies nur über einen Teil der Länge des Stapels erfolgt, vorzugsweise bis etwa zur Mitte des Wabenkörpers. Es hat sich herausgestellt, dass in diesem Teilbereich des Stapels die oberste Blechlage gleichzeitig der Verteilung des elektrischen Stroms in dem Stapel dienen kann. Der Strom sucht sich immer den kürzesten Weg bzw. den des geringsten elektrischen Widerstands, weshalb er tendenziell zum inneren Bereich des Stapels fließt, was durch eine dickere oberste Blechlage kompensiert wird. Im Zentralbereich des Wabenkörpers wird jedoch durch das gegensinnige Verschlingen des Stapels die oberste Blechlage zur untersten Blechlage, weshalb es vorteilhaft ist, sie spätestens dort enden zu lassen bzw. ab dort eine dünnere Lage weiterzuführen. Dies kann beispielsweise an einem der Punkte erfolgen, an denen auch die Verschlingung ihre Richtung wechselt.

Bei einem an beiden Enden gemäß der vorliegenden Erfindung angeschlossenen Stapel gelten die obigen Überlegungen jeweils für beide Enden, wobei im Inneren des Wabenkörpers die oberste und die unterste Blechlage des Stapels ihre Position und Funktion tauschen.

Für die Stabilisierung des Anschlussbereichs ist es besonders bevorzugt, den Stapel durch eine Vielzahl von Stützstiften in seiner Form zu stabilisieren, wobei mindestens ein Stützstift in einem Abstand von weniger als 10 cm, vorzugsweise weniger als 5 cm, besonders bevorzugt weniger als 2 cm, entlang des Verlaufs des Stapels gemessen von dem Anschlussstift entfernt angeordnet ist. Dies dient insbesondere der Stabilisierung des Luftspalts gegenüber dem Metallmantel.

Nähere Einzelheiten und Ausführungsbeispiele der Erfindung, auf die diese jedoch nicht beschränkt ist, sind in der Zeichnung dargestellt und zwar zeigen:
- Fig. 1:: einen schematischen Querschnitt durch den Bereich eines elektrischen Anschlusses eines elektrisch beheizbaren Wabenkörpers,
- Fig. 2:: eine schematische Veranschaulichung der im erfindungsgemäßen Wabenkörper verwendeten Strukturen von Blechlagen,
- Fig. 3, 4, 5, 6, 7:: verschiedene Ausführungsbeispiele eines elektrischen Anschlusses in einem erfindungsgemäßen Wabenkörper,
- Fig. 8:: eine stirnseitige Gesamtansicht eines erfindungsgemäßen Wabenkörpers und
- Fig. 9 und 10:: weitere Ausführungsbeispiele für einen elektrischen Anschluss in einem erfindungsgemäßen Wabenkörper.

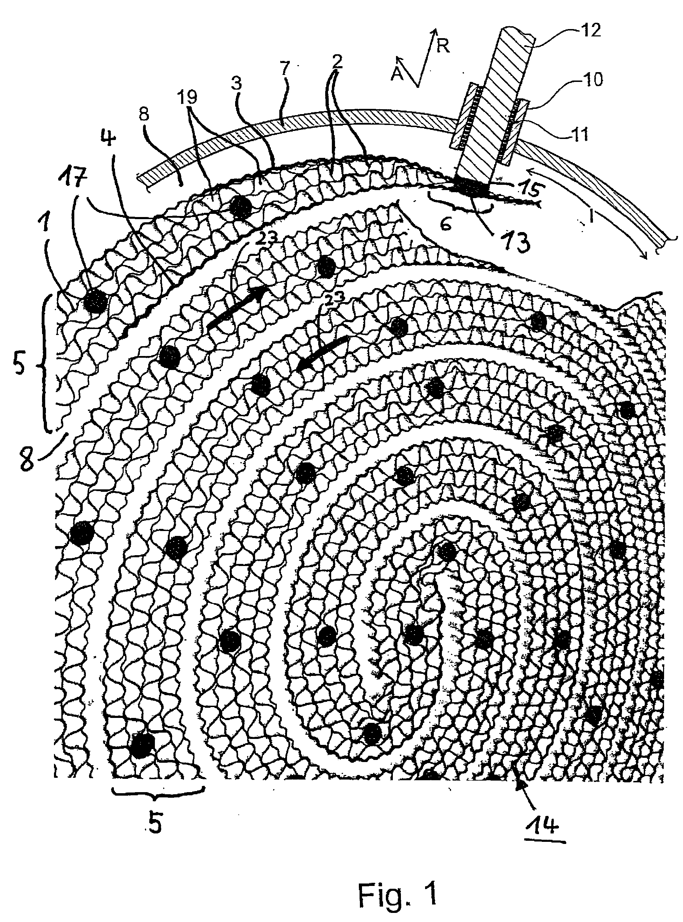

Fig. 1 zeigt in schematischer Darstellung einen Teilbereich eines elektrisch beheizbaren Wabenkörpers 14, der in einem Metallmantel 7 angeordnet ist. Der Wabenkörper 14 enthält einen Stapel 5 aus glatten oder fein strukturierten Blechlagen 1 abwechselnd angeordnet mit gewellten oder grob strukturierten Blechlagen 2, wobei der Stapel 5 eine oberste Blechlage 3 und eine unterste Blechlage 4 aufweist, die im vorliegenden Ausführungsbeispiel beide fein strukturiert sind. Die grob strukturierten Blechlagen 2 enden nacheinander innerhalb des Stapels 5, während die fein strukturierten Blechlagen 1 weiter in einen Anschlussbereich 6 geführt sind, wo sie mit dem Verbindungsende 15 eines Anschlussstifts 12 verbunden sind, vorzugweise verschweißt, insbesondere durch Widerstandsschweißen. Der Anschlussstift 12 ist durch eine Durchführung 10 durch den Metallmantel 7 geführt und durch eine elektrische Isolierschicht 11 von diesem isoliert. Der Isolierstift 12 verläuft in einer radialen Richtung R, wie durch einen Pfeil angedeutet ist. Die grob und fein strukturierten Blechlagen 1, 2 bilden Kanäle 18, die in einer ebenfalls durch einen Pfeil angedeuteten axialen Richtung A verlaufen. Der Metallmantel 7 hat einen Innenumfang I, der ebenfalls durch Pfeile angedeutet ist. Zumindest die oberste Blechlage 3 und die unterste Blechlage 4 sowie vorzugsweise auch weitere fein strukturierte Blechlagen 1 sind in einer elektrisch leitenden Verbindung 13 mit dem Stützstift 12 verbunden. Der Stapel 5 wird durch Stützstifte 17, die sich an einem hier nicht dargestellten benachbarten weiteren Wabenkörper abstützen, stabilisiert. Die Blechlagen 1, 2, 3, 4 in dem Stapel 5 bilden gemeinsam einen mittleren (theoretischen) Strompfad 23, wie durch Pfeile angedeutet ist, der einen mittleren elektrischen Widerstand pro Längeneinheit hat, also einen typischen durchschnittlichen Widerstand entlang des Verlaufs des Stapels 5.

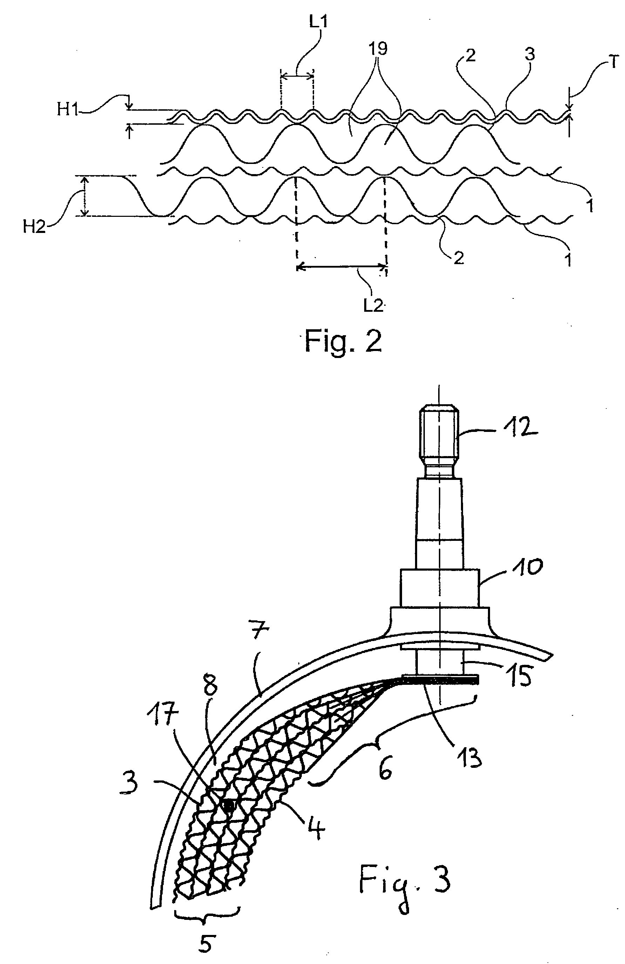

Fig. 2 veranschaulicht die Größenverhältnisse der Strukturen und Wellungen der Blechlagen 1, 2, 3, 4. Die fein strukturierten Blechlagen 1 in dem Stapel haben eine erste Wellung mit einer ersten Wellhöhe H1 und einer ersten Wellenlänge L1, die beide kleiner sind als eine zweite Wellung der grob strukturierten Bleche 2, welche eine zweite Wellhöhe H2 und eine zweite Wellenlänge L2 haben. Die oberste Blechlage 3 kann darüber hinaus eine größere Dicke T haben als die übrigen Blechlagen 1, 2 des Stapels.

Fig. 3, 4 und 5 zeigen schematisch verschiedene erfindungsgemäße Möglichkeiten, wie der Stapel 5 einen Anschlussbereich 6 bilden und an einem Verbindungsende 15 eines Anschlussstiftes 12 befestigt sein kann.

Fig. 3 veranschaulicht eine Ausführungsform, bei der der Stapel 5 in einem Anschlussbereich 6 in Richtung des Anschlussstiftes 12 immer stärker zusammengequetscht ist, wobei alle oder die Mehrzahl der Blechlagen 1, 2, 3, 4 eine elektrisch leitende Verbindung 13 zu dem Verbindungsende 15 des Anschlussstiftes 12 haben, insbesondere die oberste 3 und die unterste 4 Blechlage.

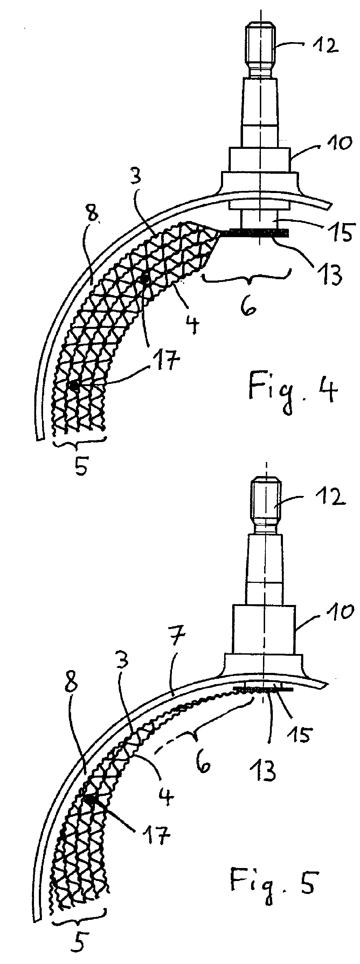

Fig. 4 zeigt eine etwas gegenüber dem Ausführungsbeispiel von Fig. 3 abgewandelte Form des Anschlussbereiches 6, bei dem die gewellten Blechlagen 2 nicht zusammengequetscht sind, sondern im Anschlussbereich 6 enden, so dass nur die oberste 3 und die unterste 4 Blechlage und gegebenenfalls ein Teil oder alle der glatten oder fein strukturierten Blechlagen 1 elekrisch leitend mit dem Anschlussende 15 des Anschlussstiftes 12 verbunden sind.

Fig 5 veranschaulicht eine weitere Variante des Anschlussbereiches 6, bei dem alle oder ein Teil der inneren Blechlagen 1, 2 nacheinander im Anschlussbereich 6 enden, vorzugsweise an der obersten Blechlage 3 auslaufen, so dass der Anschlussbereich 6 sich langsam in Richtung des Anschlussendes 15 des Anschlussstiftes 12 verjüngt, wobei zumindest die oberste 3 und die unterste 4 Blechlage eine elektrisch leitende Verbindung 13 mit dem Anschlussende 15 des Anschlussstiftes bilden.

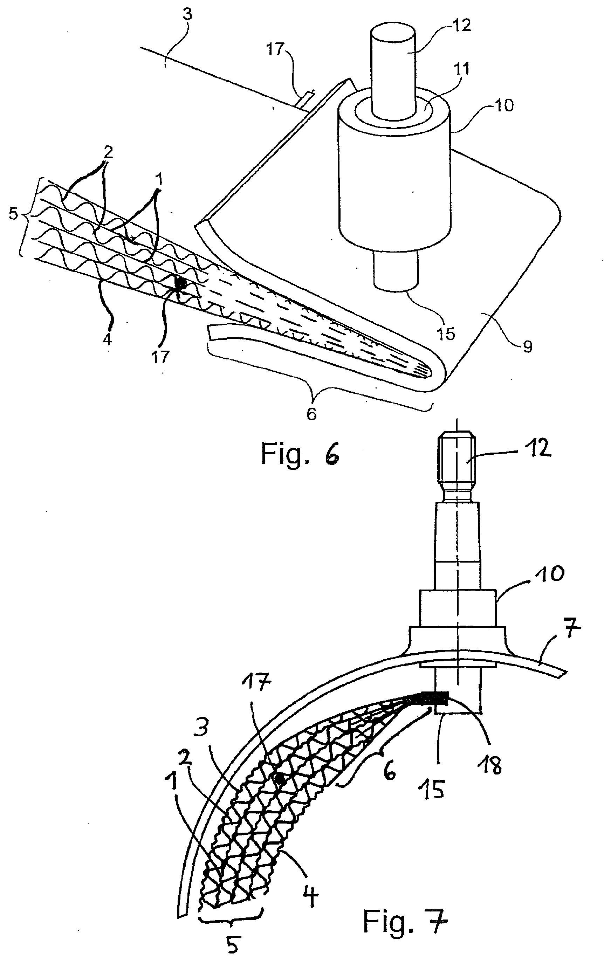

Fig. 6 zeigt schematisch, wie der Anschlussbereich 6 eines Stapels 5 aus fein strukturierten 1 und grob strukturierten 2 Blechlagen in einer anderen Ausführungsform gestaltet ist. Ein Anschlussstift 12, der wiederum mittels einer elektrischen Isolierschicht 11 von einer Durchführung 10 durch einen nicht dargestellten Metallmantel isoliert ist, endet mit seinem Verbindungsende 15 an einem Zwischenstück 9 und ist mit diesem und ggf. mit darunter liegenden Enden der Blechlagen 1, 2 elektrisch leitend verbunden, vorzugsweise verschweißt oder verlötet. Das Zwischenstück 9 umfasst im vorliegenden Ausführungsbeispiel das Ende des Stapels 5 in dem Anschlussbereich 6, wobei die genaue Ausgestaltung des Anschlussbereichs 6 ähnlich wie oben beschrieben in verschiedenen Ausführungsformen möglich ist. Alle Blechlagen können bevorzugt immer stärker zusammengepresst oder mit immer geringerer Wellhöhe ausgeführt sein, um die gewünschte sich verjüngende Form zu erreichen. Ein Stützstift 17 kann wiederum die gesamte Anordnung stabilisieren.

In Fig. 7 ist schematisch eine andere Gestaltung des Stützstifts 12 beschrieben, der an seinem Verbindungsende 15 eine Aussparung 18 aufweist, in die zwei oder mehr Blechlagen 1, 2 des Stapels 5, vorzugsweise alle Blechlagen 1, 2, eingelegt sind. Auch hier kommen verschiedene Methoden zur Verjüngung des Stapels 5 in Betracht. Die elektrisch leitende Verbindung erfolgt vorzugsweise durch Schweißen oder Löten.

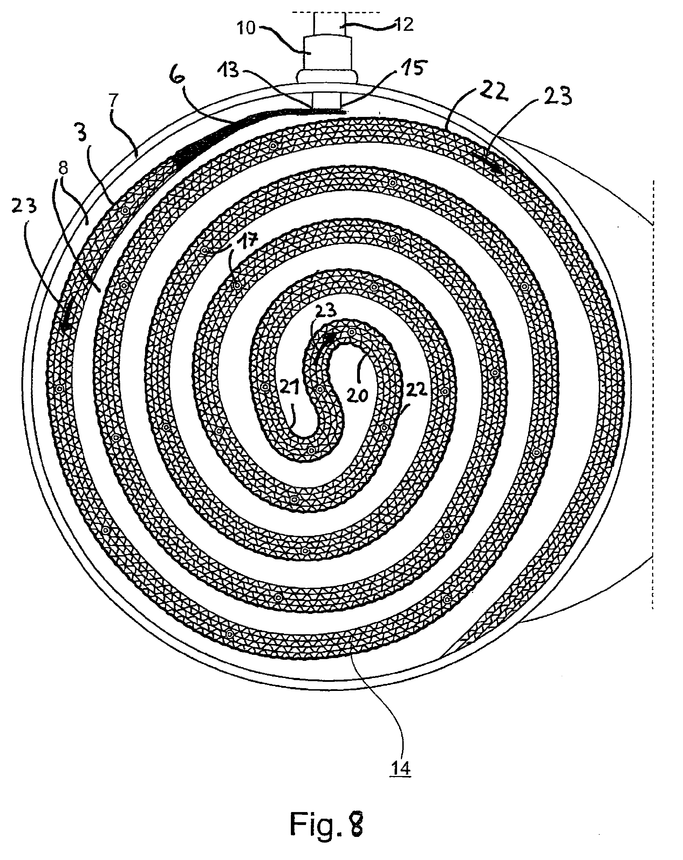

Fig. 8 zeigt eine stirnseitige Gesamtansicht weiteren Ausführungsbeispiels eines erfindungsgemäßen Wabenkörpers 14 mit einem gegensinnig verschlungenen S-förmigen Stapel 5 von Blechlagen 1, 2. Der Stapel 5 weist eine oberste Blechlage 3 auf, die von einem Anschlussbereich 6 ausgehend bis zu ihrem inneren Ende 20 etwa in der Mitte des Wabenkörpers 14 eine größere Dicke T als die übrigen Blechlagen 1, 2 hat. Im weiteren Verlauf des Stapels 5 würde die oberste Blechlage 3 zur untersten Blechlage werden, weshalb sie im Inneren endet. Dafür kann aber die bisher unterste Blechlage 4, die dann zu einer anderen oberen Blechlage 22 wird, ab einem inneren Ende 21 dieser anderen oberen Blechlage 22 dicker ausgeführt sein und ebenfalls aus einem anderen Material bestehen, insbesondere auch einer Legierung mit Nickel, Chrom und Eisen. Der Stapel 5 weist auch eine unterste Blechlage 4 auf, die vom Anschlussbereich 6 ausgehend über einen Teilbereich von 5 bis 30 cm ebenfalls eine größere Dicke T aufweist als die übrigen Blechlagen 1, 2. Eine Vielzahl von Stützstiften 17 ist über die Länge des Stapels 5 verteilt. Das eine Ende des Stapels 5 ist zu dem sich verjüngenden Anschlussbereich 6 geformt und mit einem Verbindungsende 15 eines Anschlussstiftes 12 verbunden. Dabei können bevorzugt alle Blechlagen 1, 2 bis zu dem Anschlussstift geführt sein oder, wie oben beschrieben nur ein Teil der Blechlagen 1, 2. Der Anschlussstift 12 ist durch einen Metallmantel 7 mittels einer Durchführung 10 mit elektrischer Isolierschicht 11 radial nach außen geführt. Der Stapel 5 ist mittels eines Luftspaltes 8 von dem Metallmantel 7 elektrisch isoliert. Auch die einzelnen Windungen des Stapels 5 sind durch einen Luftspalt elektrisch voneinander isoliert. Die Blechlagen 1, 2, 3, 4 des Stapels 5 bilden einen durch Pfeile angedeuteten mittleren Strompfad 23.

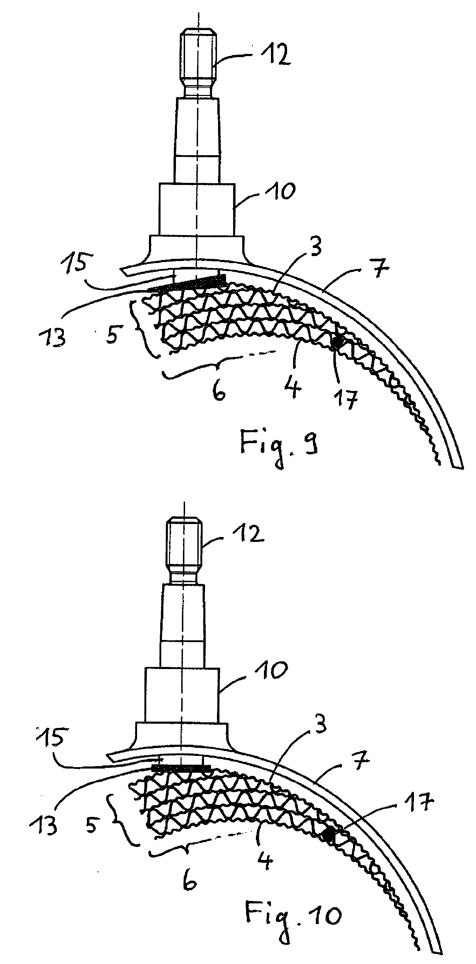

Die Figuren 9 und 10 veranschaulichen schematisch, dass es erfindungsgemäß nicht zwingend ist, den Anschlussbereich 6 genau am Anschlussende 15 des Anschlussstiftes 12 enden zu lassen. Es ist, z. B. aus Fertigungstechnischen Gründen, durchaus möglich, den Stapel 5 ein Stück vor seinem Ende zu kontaktieren, wobei die Konstruktion dennoch ohne Halbschalen oder ähnlich Stromverteilungsstrukturen auskommen kann. Dies liegt daran, dass der kritischste Bereich des Stapels 5 in der Nähe des Anschlussstiftes 12, wo relativ hohe elektrische Stromdichten im Betrieb auftreten können, durch den massiven Anschlussstift 12 selbst und durch den "überstehenden" Teil des Stapels 5, der Betrieb nur geringe Stromdichten aufweist, gut gekühlt wird. Eine elektrisch gut leitende oberste Blechlage 3, gegebenenfalls auch mit einer größeren Dicke T ist bei diesen Ausführungsformen von Vorteil. Auch muss noch mindestens eine weitere Blechlage 1, 2 elektrisch gut leitend mit dem Verbindungssende 15 des Anschlussstiftes 12 verbunden sein, um keine zu hohen Stromdichten in der obersten Blechlage 3 zu erzeugen. Dies kann beispielsweise durch eine zwei oder mehrere Blechlagen erfassende Schweißverbindung oder eine geeignete Lötverbindung erreicht werden. Auch ein Zwischenstück 9, kann zur Vergrößerung der Kontaktfläche auf 200 bis 300 % der Querschnittsfläche des Anschlussstiftes 12 zwischen Anschlussstift 12 und Stapel 5 eingesetzt werden. Je nach Länge des über den Anschlussstift 12 überstehenden Teils des Stapels 5 ist es sinnvoll, diesen Teil durch mindestens einen Stützstift 17 gegen Schwingungen und gegen eine Verformung, die zu einer elektrischen Kontaktierung des Metallmantels 7 führen könnte, zu schützen.

Auch wenn bei den Figuren der Einfachheit halber mehrere technische Merkmale gemeinsam offenbart sind, so ist deren Kombination nicht zwingend erforderlich. Vielmehr können technische Details auch ausgetauscht und/oder mit anderen technischen Details der Beschreibung / anderer Figuren kombiniert werden, soweit das hier nicht explizit ausgeschlossen wurde.

Die vorliegende Erfindung ermöglicht einen einfachen und wirtschaftlich herstellbaren Aufbau eines elektrisch beheizbaren Wabenkörpers, der auch ohne Stromverteilungsstrukturen oder stützende Halbschalen im äußeren Bereich eine sehr gleichmäßige Stromverteilung und damit Aufheizung ermöglicht.

### Bezugszeichenliste

- 1: glatte / fein strukturierte Blechlage
- 2: gewellte/ grob strukturierte Blechlage
- 3: oberste Blechlage
- 4: unterste Blechlage
- 5: Stapel
- 6: Anschlussbereich
- 7: Metallmantel
- 8: Luftspalt
- 9: Zwischenstück
- 10: Durchführung
- 11: elektrische Isolierschicht
- 12: Anschlussstift
- 13: elektrisch leitende Verbindung
- 14: Wabenkörper
- 15: Verbindungsende
- 16: Windungen
- 17: Stützstift
- 18: Aussparung
- 19: Kanal
- 20: inneres Ende der obersten Blechlage 3
- 21: inneres Ende der anderen oberen Blechlage
- 22: andere obere Blechlage
- 23: mittlerer Strompfad
- A: axiale Richtung
- R: radiale Richtung
- I: Richtung des Innenumfangs des Mantels
- H1: erste Wellhöhe
- H2: zweite Wellhöhe
- L1: erste Wellenlänge
- L2: zweite Wellenlänge
- T: Dicke

## Patentansprüche

1. Wabenkörper (14) mit mehreren gemeinsam mindestens einen mittleren elektrisch leitfähigen Strompfad (23) bildenden Blechlagen (1, 2, 3, 4) elektrisch verbunden mit einem Anschlussstift (12), wobei der Wabenkörper (14) einen einen Innenumfang (I) bestimmenden Metallmantel (7) aufweist, durch den der Anschlussstift (12) in einer Durchführung (10) elektrisch isolierend hindurchgeführt ist, und wobei die Blechlagen (1, 2, 3, 4) abwechselnd angeordnete grob strukturierte Blechlagen (2) und fein strukturierte oder glatte Blechlagen (1) sind, die gemeinsam einen Stapel (5) mit einer obersten (3) und einer untersten Blechlage (4) bilden, der für ein Gas in einer axialen Richtung (A) durchströmbare Kanäle (19) zwischen den Blechlagen (1, 2, 3, 4) aufweist, **dadurch gekennzeichnet, dass** der Anschlussstift (12) in einer radialen Richtung (R) durch den Metallmantel (7) verläuft und durch eine elektrisch leitende Verbindung (13) in einem Anschlussbereich (6) mit mindestens zwei der Blechlagen (1, 2, 3, 4) direkt oder über mindestens ein Zwischenstück (9) metallisch verbunden ist, wobei der elektrische Widerstand pro Längeneinheit des mittleren Strompfades (23) in dem Anschlussbereich (6) höchstens 10 % größer ist als ein mittlerer elektrischer Widerstand pro Längeneinheit des mittleren Strompfades (23) in dem Stapel (5).

2. Wabenkörper (14) nach Anspruch 1, **dadurch gekennzeichnet, dass** die oberste Blechlage (3) in dem Stapel (5) über mindestens 35 % des Innenumfangs (I) parallel zu dem Metallmantel (7) verläuft und durch einen Luftspalt (8) von diesem getrennt ist.

3. Wabenkörper (14) nach Anspruch 1 oder 2, **dadurch gekennzeichnet, dass** die oberste Blechlage (3) in dem Stapel (5) über mindestens 40 % der Länge des Innenumfangs (I) parallel zu dem Metallmantel (7) verläuft.

4. Wabenkörper (14) nach Anspruch 1, 2 oder 3, **dadurch gekennzeichnet, dass** zumindest die oberste Blechlage (3) oder die unterste Blechlage (4) des Stapels (5) fein strukturiert oder glatt ist.

5. Wabenkörper (14) nach einem der vorhergehenden Ansprüche, **dadurch gekennzeichnet, dass** zumindest die oberste Blechlage (3) oder die unterste Blechlage (4) zumindest in Teilbereichen eine Dickenverstärkung (25) aufweisen oder dicker sind als die übrigen Blechlagen (1, 2).

6. Wabenkörper (14) nach Anspruch 5, **dadurch gekennzeichnet, dass** die unterste Blechlage (4) zumindest in einem Anschlussbereich (6) und entlang eines Teils des Stapels (5) eine Dickenverstärkung (25) aufweist oder dicker als die übrigen Blechlagen (1, 2) ist.

7. Wabenkörper (14) nach einem der vorhergehenden Ansprüche, **dadurch gekennzeichnet, dass** zumindest die oberste Blechlage (3) aus einem Nickel, Chrom und Eisen enthaltenden Stahl (NiCroFer) hergestellt ist.

8. Wabenkörper (14) nach einem der vorhergehenden Ansprüche, **dadurch gekennzeichnet, dass** die grob strukturierten Blechlagen (2) in dem Stapel (5) kürzer sind als die glatten oder fein strukturierten Blechlagen (1, 3, 4), und zwar so, dass die grob strukturierten Blechlagen (2) vor Erreichen des Anschlussstiftes (12) enden und nur die glatten oder fein strukturierten Blechlagen (1, 3, 4) in einem Anschlussbereich (6) bis zum Anschlussstift (12) verlaufen.

9. Wabenkörper (14) nach einem der vorhergehenden Ansprüche, **dadurch gekennzeichnet, dass** die grob strukturierten Blechlagen (2) und die fein strukturierten Blechlagen (1, 3, 4) jeweils gewellt sind, wobei eine zweite Wellhöhe (H2) der grob strukturierten Blechlagen (2) größer ist als eine erste Wellhöhe (H1) der fein strukturierten Blechlagen (1, 3, 4), und zwar um einen Faktor 3 bis 10.

10. Wabenkörper (14) nach einem der vorhergehenden Ansprüche, **dadurch gekennzeichnet, dass** die grob strukturierten Blechlagen (2) und die fein strukturierten Blechlagen (1, 3, 4) gewellt sind, wobei eine zweite Wellenlänge (L2) der grob strukturierten Blechlagen (2) größer ist als eine erste Wellenlänge (L1) der fein strukturierten Blechlagen (1, 3, 4), und zwar mindestens um einen Faktor 1,5.

11. Wabenkörper (14) nach einem der vorhergehenden Ansprüche, **dadurch gekennzeichnet, dass** der Anschlussstift (12) direkt mit glatten oder fein strukturierten Blechlagen (1, 3, 4) des Stapels (5) verbunden ist.

12. Wabenkörper (14) nach einem Ansprüche 1 bis 9, **dadurch gekennzeichnet, dass** der Anschlussstift (12) unter Zwischenschaltung eines Zwischenstücks (9) mit Blechlagen (1, 3, 4) des Stapels (5) metallisch verbunden ist, wobei das Zwischenstück (9) mehrere Blechlagen (1, 3, 4) des Stapels (5) in einem Anschlussbereich (6) umfasst.

13. Wabenkörper (14) nach einem der vorhergehenden Ansprüche, **dadurch gekennzeichnet, dass** der Anschlussstift (12) auf einer Fläche von mindestens 10 mm² mit zwei bis fünf Blechlagen (1, 2, 3, 4) des Stapels (5) metallisch verbunden ist, wobei das Verbindungsende (15) des Anschlussstifts (12) 3 bis 8 mm vom Innenumfang (I) des Metallmantels (7) beabstandet ist.

14. Wabenkörper (14) nach einem der vorhergehenden Ansprüche, **dadurch gekennzeichnet, dass** der Stapel (5) fünf bis fünfzehn Blechlagen (1, 2, 3, 4) enthält und gegensinnig verschlungen nach Art einer S-Form in dem Wabenkörper (14) angeordnet ist, wobei die Windungen (16) des Stapels (5) untereinander durch Luftspalte (8) elektrisch isoliert sind.

15. Wabenkörper (14) nach Anspruch 13, **dadurch gekennzeichnet, dass** zumindest die dickere oberste Blechlage (3) des Stapels (5) oder ihre Dickenverstärkung (25) sich nur über einen Teil der Länge des Stapels erstreckt.

16. Wabenkörper (14) nach einem der vorhergehenden Ansprüche, **dadurch gekennzeichnet, dass** der Stapel (5) durch eine Vielzahl von Stützstiften (17) in seiner Form stabilisiert ist, wobei mindestens ein Stützstift (17) in einem Abstand von weniger als 10 cm entlang des Verlaufs des Stapels (5) gemessen von dem Anschlussstift (12) entfernt angeordnet ist.

## Claims

1. Honeycomb body (14) having comprising multiple sheet metal layers (1, 2, 3, 4) that together form at least one central electrically conductive current path (23) and are electrically connected to a connecting pin (12), wherein the honeycomb bond (14) comprises a metal casing (7) that determines an inner circumference (I) and the connecting pin (12) is guided in an electrically insulating manner in a feedthrough (10) through said metal casing, and wherein the sheet metal layers (1, 2, 3, 4) are arranged in an alternating manner coarsely structured sheet metal layers (2) and finely structured or smooth metal sheets (1) that together form a stack (5) having an uppermost sheet metal layer (3) and a lowermost sheet metal layer (4), said stack comprising channels (19) between the sheet metal layers (1, 2, 3, 4) and a gas can flow through said channels in an axial direction (A) **characterized in that** the connecting pin (12) extends in a radial direction (R) through the metal casing (7) and is connected using a metal by means of an electrically conductive connection (13) in a connection region (6) to at least two of the sheet metal layers (1, 2, 3 4) directly or by way of at least one intermediate piece (9), wherein the electrical resistance per unit length of the central current path (23) in the connection region (6) is at the maximum 10% greater than a central electrical resistance per unit length of the central current path (23) in the stack (5).

2. Honeycomb body (14) according to Claim 1, **characterized in that** the uppermost sheet metal layer (3) in the stack (5) extends over at least 35% of the inner periphery (I) parallel to the metal casing (7) and is separated from said metal casing by means of an air gap (8).

3. Honeycomb body (14) according to Claim 1 or 2, **characterized in that** the uppermost sheet metal layer (3) in the stack (5) extends over at least 40% of the length of the inner periphery (I) parallel to the metal casing (7).

4. Honeycomb body (14) according to Claim 1, 2, or 3, **characterized in that** at least the uppermost sheet metal layer (3) or the lowermost sheet metal layer (4) of the stack (5) is finely structured or smooth.

5. Honeycomb body (14) according to any one of the preceding claims, **characterized in that** at least the uppermost sheet metal layer (3) or the lowermost sheet metal layer (4) at least in part regions have a greater thickness (25) or are thicker than the other sheet metal layers (1, 2).

6. Honeycomb body (14) according to Claim 5, **characterized in that** the lowermost sheet metal layer (4) has at least in one connection region (6) and along a part of the stack (5) a greater thickness (25) or is thicker than the other sheet metal layers (1, 2).

7. Honeycomb body (14) according to any one of the preceding claims, **characterized in that** at least the uppermost sheet metal layer (3) is embodied from a steel (NiCroFer) that contains nickel, chrome and iron.

8. Honeycomb body (14) according to any one of the preceding claims, **characterized in that** the coarsely structured sheet metal layers (2) in the stack (5) are shorter than the smooth or finely structured sheet metal layers (1, 3, 4), and in fact in such a manner that the coarsely structured sheet metal layers (2) terminate prior to arriving at the connecting pin (12) and only the smooth or finely structured sheet metal layers (1, 3, 4) extend in a connection region (6) up to the connecting pin (12).

9. Honeycomb body (14) according to any one of the preceding claims, **characterized in that** the coarsely structured sheet metal layers (2) and the finely structured sheet metal layers (1, 3, 4) are in each case rippled, wherein a second ripple height (H2) of the coarsely structured sheet metal layers (2) is greater than a first ripple height (H1) of the finely structured sheet metal layers (1, 3, 4) and in fact by a factor 3 to 10.

10. Honeycomb body (14) according to any one of the preceding claims, **characterized in that** the coarsely structured sheet metal layers (2) and the finely structured sheet metal layers (1, 3, 4) are rippled, wherein a second ripple length (L2) of the coarsely structured sheet metal layers (2) is greater than a first ripple length (L1) of the finely structured sheet metal layers (1, 3, 4) and in fact at least by a factor 1.5.

11. Honeycomb body (14) according to any one of the preceding claims, **characterized in that** the connecting pin (12) is connected directly to smooth or finely structured sheet metal layers (1, 3, 4) of the stack (5).

12. Honeycomb body (14) according to any one of Claims 1 to 9, **characterized in that** the connecting pin (12) is connected using a metal to the sheet metal layers (1, 3, 4) of the stack (5) by means of inter-positioning an intermediate piece (9), wherein the intermediate piece (9) comprises multiple sheet metal layers (1, 3, 4) of the stack (5) in a connection region (6).

13. Honeycomb body (14) according to any one of the preceding claims, **characterized in that** the connecting pin (12) is connected using a metal on a surface area of at least 10 mm² to two to five sheet metal layers (1, 2, 3, 4) of the stack (5), wherein the connecting end (15) of the connecting pin (12) is at a distance of 3 to 8 mm from the inner periphery (I) of the metal casing (7).

14. Honeycomb body (14) according to any one of the preceding claims, **characterized in that** the stack (5) comprises five to fifteen sheet metal layers (1, 2, 3, 4) and is arranged in an anti-clockwise looped-arrangement in an S-shape in the honeycomb body (14), wherein the windings (16) of the stack (5) are electrically insulated from one another by means of an air gap (8).

15. Honeycomb body (14) according to Claim 13, **characterized in that** at least the thicker uppermost sheet metal layer (3) of the stack (5) or its area of greater thickness (25) extends only over a part of the length of the stack.

16. Honeycomb body (14) according to any one of the preceding claims, **characterized in that** the stack (5) is stabilized in its shape by means of a multiplicity of supporting pins (17), wherein at least one supporting pin (17) is arranged at a distance from the connecting pin (12) of less than 10 mm measured along the progression of the stack (5).

## Revendications

1. Corps (14) en nid d'abeilles comprenant plusieurs couches (1, 2, 3, 4) de tôle formant un trajet (23) de courant conducteur de l'électricité et relié électriquement à une broche (12) de borne, le corps (14) en nid d'abeilles ayant une enveloppe (7) métallique qui définit un pourtour (I) intérieur et à travers laquelle la broche (12) de borne passe d'une manière isolée électriquement dans une traversée (10) et dans lequel les couches (1, 2, 3, 4) de tôle sont des couches (2) de tôle structurées grossièrement et des couches (1) de tôle structurées finement ou lisses disposées en alternance, qui forment conjointement une pile (5) ayant une couche (3) de tôle supérieure et une couche (4) de tôle inférieure, qui a entre les couches (1, 2, 3, 4) de tôle des canaux (19) de passage d'un gaz dans une direction (A) axiale, **caractérisé en ce que** la broche (12) de borne traverse dans une direction (R) radiale l'enveloppe (7) métallique et est reliée métalliquement directement ou par au moins une pièce (9) intermédiaire par une liaison (13) conductrice de l'électricité dans une zone (6) de borne, à au moins deux des couches (1, 2, 3, 4) de tôle, la résistance électrique par unité de longueur du trajet (23) de courant médian dans la zone (6) de borne étant plus grande au plus de 10 % qu'une résistance électrique médiane par unité de longueur du trajet (23) de courant médian dans la pile (5).

2. Corps (14) en nid d'abeilles suivant la revendication 1, **caractérisé en ce que** la couche (3) de tôle supérieure de la pile (5) s'étend parallèlement à l'enveloppe (7) métallique sur au moins 35 % du pourtour (I) intérieur et est séparée de l'enveloppe (7) métallique par un entrefer (8).

3. Corps (14) en nid d'abeilles suivant la revendication 1 ou 2, **caractérisé en ce que** la couche (3) de tôle supérieure de la pile (5) s'étend parallèlement à l'enveloppe (7) métallique sur au moins 40 % de la longueur du pourtour (I) intérieur.

4. Corps (14) en nid d'abeilles suivant la revendication 1, 2 ou 3, **caractérisé en ce qu'**au moins la couche (3) de tôle supérieure ou la couche (4) de tôle inférieure de la pile (5) est structurée finement ou est lisse.

5. Corps (14) en nid d'abeilles suivant l'une des revendications précédentes, **caractérisé en ce qu'**au moins la couche (3) de tôle supérieure ou la couche (4) de tôle inférieure ont au moins dans des zones partielles un renforcement (25) en épaisseur ou sont plus épaisses que les autres couches (1, 2) de tôle.

6. Corps (14) en nid d'abeilles suivant la revendication 5, **caractérisé en ce que** la couche (4) de tôle inférieure a au moins dans une zone (6) de borne et le long d'une partie de la pile (5) un renforcement (25) en épaisseur ou est plus épaisse que les autres couches (1, 2) de tôle.

7. Corps (14) en nid d'abeilles suivant l'une des revendications précédentes, **caractérisé en ce qu'**au moins la couche (3) de tôle supérieure est en un acier contenant du nickel, du chrome et du fer (NiCroFer).

8. Corps (14) en nid d'abeilles suivant l'une des revendications précédentes, **caractérisé en ce que** les couches (2) de tôle structurées grossièrement de la pile (5) sont plus courtes que les couches (1, 3, 4) de tôle lisses ou structurées finement et cela de manière à ce que les couches (2) de tôle structurées grossièrement se terminent avant d'atteindre la broche (12) de borne et seules les couches (1, 3, 4) de tôle lisses ou structurées finement s'étendent dans une zone (6) de borne jusqu'à la broche (12) de borne.

9. Corps (14) en nid d'abeilles suivant l'une des revendications précédentes, **caractérisé en ce que** les couches (2) de tôle structurées grossièrement et les couches (1, 3, 4) de tôle structurées finement sont respectivement ondulées, une deuxième hauteur (H2) d'ondulation des couches (2) de tôle structurées grossièrement étant plus grandes qu'une première hauteur (H1) d'ondulation des couches (1, 3, 4) de tôle structurées finement, et cela d'un facteur de 3 à 10.

10. Corps (14) en nid d'abeilles suivant l'une des revendications précédentes, **caractérisé en ce que** les couches (2) de tôle structurées grossièrement et les couches (1, 3, 4) de tôle structurées finement sont ondulées, une deuxième longueur d'onde (L2) des couches (2) de tôle structurées grossièrement est plus grande qu'une première longueur d'onde (L1) des couches (1, 3, 4) de tôle structurées finement, et cela d'au moins un facteur de 1,5.

11. Corps (14) en nid d'abeilles suivant l'une des revendications précédentes, **caractérisé en ce que** la broche (12) de borne est reliée directement aux couches (1, 3, 4) de tôle lisses ou structurées finement de la pile (5).

12. Corps (14) en nid d'abeilles suivant l'une des revendications 1 à 9, **caractérisé en ce que** la broche (12) de borne est reliée métalliquement aux couches (1, 3, 4) de la pile (5) avec interposition d'une pièce (9) intermédiaire, la pièce (9) intermédiaire comprenant dans une zone (6) de borne plusieurs couches (1, 3, 4) de tôle de la pile (5).

13. Corps (14) en nid d'abeilles suivant l'une des revendications précédentes, **caractérisé en ce que** la broche (12) de borne est reliée métalliquement à de deux à cinq couches (1, 2, 3, 4) de tôle de la pile (5) sur une surface d'au moins 10 mm², l'extrémité (15) de liaison de la broche (12) de borne étant à une distance de 3 à 8 mm du pourtour (I) intérieur de l'enveloppe (7) métallique.

14. Corps (14) en nid d'abeilles suivant l'une des revendications précédentes, **caractérisé en ce que** la pile (5) contient de cinq à quinze couches (1, 2, 3, 4) de tôle et est enchevêtrée en sens inverse à la manière d'une forme en S dans le corps (14) en nid d'abeilles, les spires (16) de la pile (5) étant isolées électriquement entre elles par des entrefers (8).

15. Corps (14) en nid d'abeilles suivant la revendication 13, **caractérisé en ce qu'**au moins la couche (3) de tôle supérieure plus épaisse de la pile (5) ou son renforcement (25) en épaisseur ne s'étend que sur une partie de la longueur de la pile.

16. Corps (14) en nid d'abeilles suivant l'une des revendications précédentes, **caractérisé en ce que** la pile (5) est stabilisée dans sa forme par une pluralité de broches (17) d'appui, au moins une broche (17) étant à une distance de moins de 10 cm mesurée le long de l'étendue de la pile (5) de la broche (12) de borne.
